# EUROPEAN PATENT SPECIFICATION

(11) **EP 1 771 377 B1**
(45) Date of publication and mention of the grant of the patent: **31.12.2014**
(21) Application number: 04745133.1
(22) Date of filing: 30.06.2004
(51) Int. Cl.: C01B 11/22

(54) **IODIZING AGENT AND PROCESS FOR PREPARATION THEREOF**
IODIERUNGSMITTEL UND HERSTELLUNGSVERFAHREN DAFÜR
AGENT IODANT ET SON PROCEDE DE PREPARATION

(43) Date of publication of application: 11.04.2007
(73) Proprietor: Council of Scientific and Industrial Research, New Delhi 100 001 (IN)
(72) Inventor: GHOSH, Pushpito Kumar, Bhavnagar 364 002, Gujarat (IN); MEHTA, Satish Hariray, Bhavnagar 364 002, Gujarat (IN); CHUNAWALA, Jatin R., Bhavnagar 364 002, Gujarat (IN); SHETH, Mrunalben V., Bhavnagar 364 002, Gujarat (IN); GANDHI, Mahesh R., Bhavnagar 364 002, Gujarat (IN)
(74) Representative: Manaton, Ross Timothy
(86) International application number: PCT/IN2004/000190
(87) International publication number: WO 2006/003669

(56) References cited:
- T. TORAISHI, S. NAGASAKI, S. TANAKA: "Adsorption behavior of IO3- and CO32- and NO3--hydrotalcite" APPLIED CLAY SCIENCE, vol. 22, 2002, pages 17-23, XP002318031 cited in the application
- G. ARROYAVE, O. PINEDA, N.S. SCRIMSHAW: "The Stability of Potassium Iodate in Crude Table Salt" BULLETIN WORLD HEALTH ORGANISATION, vol. 14, 1956, pages 183-185, XP002318030 cited in the application

## Description

### Field of the invention

The present invention relates to a novel iodizing agent. The present invention also relates to a novel process for the preparation of the iodizing agent from Pharma grade hydrotalcite and water soluble alkali iodate by intercalating iodate anion in the interlayer space. The iodizing agent so prepared is stable and can be effectively used in the formulation of iodized salt, wherein it offers stability to iodine.

### Background of the invention

Iodine is a very important trace element necessary in the biosynthesis of thyroid hormones. Iodine is required for developing and maintaining healthy body. There are well known Iodine Deficiency Disorders like Goiter and Cretinism. The edible salt is chosen as a vehicle in the provision of iodine because of its uniform consumption and availability to all segments of population independent of social or economic status. During the past twenty years, there has been a strong effort, lead by the United Nations, to iodize all salt for human consumption. Potassium iodate and potassium iodide are most often used in iodizing the edible salt. The Food and Nutrition Board of National Research Council of the USA placed the optimum requirement of iodine at 150-300µg per day, and considering 10 gm of salt consumption per day, the iodisation level of salt could be around 15-30 mg per kg of salt. The impurities present in edible salt, moisture and temperature are some of the main factors that induce loss of iodine from iodized salt. In order to deliver adequate amount of iodine to the consumer while avoiding the unnecessary excess addition of iodizing agent in salt that is normally done to compensate for losses, it is of paramount importance that an ultrastable iodizing agent should be developed. This would allow a simultaneous benefit in as much as it may not be necessary to purify salt excessively as is the practice at present to minimize iodine loss apart from imparting a superior aesthetic effect such as free flow nature. The latter is especially important, as it is well known that impurities such as magnesium are required as micronutrient and can also enhance the saltiness of salt.

Reference may be made to a paper entitled "Stability of iodine in iodized salt" by L.L.Diosady and Venkatesh Mannar, published in The Proceedings of 8th World Salt Symposium, 2000, Volume 2, pp 977-982*,* wherein it is stated in the abstract that, "since iodine readily sublimes at ambient temperature, the effectiveness of salt iodisation programs depends on the stability of the iodine carrier, typically potassium iodate." The authors further state that they examined the stability of iodine in typical salts available in 12 countries in a controlled laboratory setting, at 40°C and controlled humidity (60 or 100 %) for periods up to 12 months. Iodine was rapidly lost in most unrefined salt samples. Further, the presence of moisture due to hygroscopic impurities, and metal ion impurities, such as iron accelerated the loss of iodine.

Reference may be made to a paper entitled "Stability of iodized salt with respect to iodine content" by S.A.Chauhan et al. in Research and industry, March 1992, Vol 37, pp 38-41 wherein stability of iodine in iodized salt prepared by submersion method using solution of potassium iodate was studied for iodized salt packed in HDPE bags, for iodized salt exposed to atmosphere, iodized salt solution on boiling and iodized salt under heating up to 120°C. The draw back associated with this work evinces that there is considerable loss of iodine during storage in bags or in open atmosphere. Moreover, significant loss of iodine is observed on boiling the salt solution or heating the iodised salt.

Reference may be made to a paper entitled "The stability of potassium iodate in crude table salt", by Arroyave,G. et. al., in Bull. World Health Organisation, 1956, 14, pp183-155*,* wherein potassium iodate was stabilized by calcium carbonate in crude sea salt stored in hemp fiber sacks for up to eight months at ambient temperatures and relative humidity between 70 and 84%. Only some 3.5% of added iodine was reported to be lost. The main draw back is that the stability of iodine under exposure to atmosphere and under variable temperature has not been studied. However, as is well known to practitioners in this field, this is not the approach followed in practice for stabilization, presumably because the results are not as encouraging as that indicated in the above report.

Reference may be made to a paper entitled "Micro encapsulation for iodine stability in salt fortified with ferrous fumarate and potassium iodide" by Diosady L.L. et. al., in Food Research International, 2002, Volume 35, Issue 7, pp 635-642 wherein potassium iodide and potassium iodate were encapsulated in modified starches, gelatin, sodium hexametaphosphate and purified sodium chloride by spray drying and fluidized bed drying to produce microcapsules containing 0.3 to 2% iodine. The most stable combination, containing 50 mg iodine and 1000 mg iron per kg salt, retained more than 75% of the added iodine for a year at 40°C, 100% RH. The authors have not given data on stability of iodine for singly fortified salt but even if it were very stable, the process of micro encapsulation is expensive.

Reference may be made to the paper entitled "Synthesis, thermal investigations and solubility of a new double salt K2Mg(IO3)4.2H2O" by D. Rabadjieva and M. Maneva in Thermochimica Acta, 1997, Vol 293, pp 117-123*,* which describe the thermal properties of the new IO₃-containing double salt. There is no mention of its suitability, if any, as an iodizing agent. Moreover, the high local concentration of iodine would make it difficult to guarantee uniform distribution in the product while ensuring a total iodine not exceeding 30 ppm.

Reference may be made to the paper entitled "The properties of salt-filled sodalites. Part 4. Synthesis and heterogeneous reactions of iodate-enclathrated sodalite." By Joseph Christian Buhl, in "Thermochimica Acta, 1996, Vol 286, pp 251-262*,* where in sodalite solid solution Na₈[AlSiO₄]₆(IO₃)_{2-*x*}(OH·H₂O)*ₓ*; (0.7 < *x* < 1.3) is produced from the system Na₂O-2SiO₂-Al₂O₃-NaIO₃-H₂O under hydrothermal conditions. The main disadvantage of this kind of compound for its use as iodising agent in the preparation of iodised salt is its high alkalinity that would make it unsuitable in pharmaceutical or food application. Further, the concentration of iodate in this compound is too high for even distribution in edible salt.

Reference may be made to the paper entitled" Anionic clay minerals" by W.T.Reichle, in Chemtech, January 1986, pp58-63 which describes the structure and properties of hydrotalcites which are layered anionic clays bearing the chemical composition [Mg₆Al₂(OH)₁₆CO₃.4H₂O]. These materials are used widely in antacid formulations as well as other applications such as halogen scavenger, adsorbent for wastewater treatment, stabilizer in poly-vinyl chloride and fire-retardant. There is no report however of the use of such materials for the preparation of iodizing agent.

Reference may be made to the paper entitled " Adsorption behavior of IO3- by CO32-and NO32- - hydrotalcite" by Takashi Toraishi et. al. in Applied Clay Science, 2002, 22, pp 17-23, wherein the adsorption behavior of iodate by hydrotalcite type compounds with CO₃ (HTCO₃) and NO₃ (HTNO₃) was studied for their application in removal of iodate from radioactive waste for disposal. The authors found that HTNO₃ can adsorb iodate but no mention is made of the possible use of such methodology for preparation of iodizing agent. Moreover, HTNO₃ is not recommended for edible purpose.

Reference may be made to P.M.Oza et. al. in Indian patent application No. 1053/DEL/2000, where in an improved process for the preparation of Hydrotalcite from bittern-mother liquor left after separation of salt- has been disclosed. The hydrotalcite contains carbonate anion and no attempt was made to substitute the carbonate with other anions.

Reference may be made to the paper entitled "The use of Hydrotalcite as an anion adsorbent" by Linda M. Parker et. al. in Ind. Eng. Chem. Res. 1995, 34, pp1196-1202 where in use of fired and non fired HTCO₃ for adsorption of anions like Cl⁻, Br⁻, NO₃⁻, HPO₄⁻, SO₄⁻ and borate was studied carried out. However, there is no mention of any study with iodate anion.

### Objects of the invention

The main object of the present invention is to provide a process for the preparation of novel iodizing agent, which obviates the drawbacks as detailed above.

Another object of the present invention is to sequester the iodate anion in the iodizing agent in its matrix to prevent the chemical degradation in presence of moisture and chemical impurities such as MgCl₂ in the salt.

Still another object of the present invention is to promote the use of salt containing beneficial impurities for the body while at the same time reducing cost of purification of salt and maintaining the iodizing agent in stable form.

Yet another object of the present invention is to utilize the iodine-containing iodate anion as the iodizing agent as practiced in many tropical countries such as India.

Yet another object of the present invention is to enhance the stability of the iodate anion and protect it from direct exposure by incorporating it in the interlayer space of synthetic hydotalcite.

Yet another object of the present invention is to substitute a part of the carbonate anion in the synthetic hydrotalcite with iodate anion.

Yet another object of the present invention is to intercalate iodate anions available in the solution, in the interlayer space of hydrotalcite by thermal decomposition of the carbonate anion in synthetic hydrotalcite.

Yet another object of the present invention is to make use of water-soluble alkali iodate.

Yet another object of the present invention is to intercalate iodate anion into synthetic hydrotalcite with iodine content in the range of 0.5-10.0 % (w/w).

Yet another object of the present invention is to intercalate more than 85 % of the total iodate taken for the intercalation reaction.

### Summary of the invention

The aim of the present invention is directed to provide a novel process for the preparation of an iodizing agent with iodine content in the range of 0.5 to 10.0 % (w/w). The Pharma grade synthetic hydrotalcite having (i) MgO: Al₂O₃ molar ratio in the range of 7.7 to 4.6; (ii)XRD pattern with intensity peaks (A⁰) 7.77, 3.87, 2.57, 1.53, and 1.42 ; (iii) and sharp IR absorption peak at ca. 1360cm⁻¹ was used for the preparation of a stable iodizing agent. The calculated amount of hydrotalcite was, prior to interaction with potassium iodate solution, at appropriate temperature and under continuous stirring, was powdered to desired size, calcined and cooled. During the reaction, the temperature of the reaction was maintained between 60 to 80 °C for a period of about five minutes. The present process is rapid and cost effective giving highly stable iodizing agent. The solid agent can be obtained by simple filtration, drying and it obviates the need for any further purification step. This iodizing agent is useful for iodization of common salt where the loss of iodine in presence of moisture, metal salts and on exposure to high temperature is not affected.

Accordingly the present invention provides a method for the preparation of iodizing agent that offers stability of iodine in formulation of iodised salt, the method comprising:
(i) grinding pharma grade hydrotalcite to obtain hydrotalcite powder;
(ii) calcining the powdered hydrotalcite obtained in step (i);
(iii) cooling the calcined hydrotalcite to obtain solid synthetic hydrotalcite;
(iv) heating an aqueous potassium iodate solution;
(v) adding calculated quantity of the solid synthetic hydrotalcite obtained in step (iii) into the potassium iodate solution prepared in step (iv) under agitation for uniform dispersion;
(vi) maintaining the temperature in the range of 60 to 80 °C while stirring the reactants to obtain a slurry;
(vii) aging the slurry for a period between 30 to 60 minutes and intermittently stirring for 1 minute at an interval of 30 minutes for effective contact and substitution of anions in the interlayer space;
(viii) filtering the resultant slurry and washing the cake so obtained with distilled water to remove adhering salts therefrom;
(ix) drying the cake to get the iodizing agent.

In an embodiment of the present invention pharma grade synthetic hydrotalcite having MgO:Al₂O₃ molar ratio of in the range of 7.7 to 4.6; XRD pattern having intensity peaks (A°) 7.77, 3.87, 2.57, 1.53, 1.50, 1.42 and sharp IR absorption peak of interlayer carbonate ions at ca.1360cm⁻¹ is used for the preparation of stable iodizing agent.

In another embodiment of the present invention the synthetic hydrotalcite was ground to pass through 60 BSS mesh.

In yet another embodiment of the present invention, the iodate salt may be of water soluble alkali metal salts.

In still another embodiment of the present invention, the hydrotalcites may be calcined in the temperature arrange of 450°C to 550 °C for 30 to 75 minutes followed by cooling to 60-80°C.

In still another embodiment of the present invention, the concentration of metal salt may be in the range of 0.005 to 0.022 molar.

In still another embodiment of the present invention, the aqueous solution was heated in the range 60-80°C prior to addition of calcined synthetic hydrotalcite.

In yet another embodiment of the present invention the iodine content in the synthetic hydrotalcite was in the range of 0.5-10.0% (w/w).

In yet another embodiment of the present invention, the iodate-containing synthetic hydrotalcite was dried in an oven at 80-110°C to expel all moisture.

In yet another embodiment of the present invention, the iodine content of the iodised salt using novel iodizing agent subjected to stability studies was 30ppm.

### Detailed description of the invention

In accordance with the present invention, a modified hydrotalcite composition containing iodate anion is prepared and utilised for the preparation of iodized salt having greater stability of iodine. Hydrotalcite (Mg₆Al₂(OH)₁₆CO₃.4H₂O) is a naturally occurring mineral known for its antacid properties. However, natural form is not pure enough and occurs in small deposits. So, proprietary processes have developed synthetic hydrotalcite for pharmaceutical industry as antacid. Synthetic hydrotalcite is anionic clay. Here cationic layer is crystalline magnesium hydroxide (brucite) in which aluminium cation partially substitutes for magnesium cation. This substitution gives rise to a positive charge which is neutralised by exchangeable carbonate and/or sulphate anion in the anionic layer for synthetic hydrotalcite and magaldrate, respectively for their use in antacid formulations.

The hydrotalcite (HTCO₃) is prepared from magnesium rich bittern-the mother liquor left out after separation of salt from the brine by solar evaporation-by known technique in the prior art and grinding to pass through 60 BSS mesh. The synthetic hydrotalcite suitable for pharmaceutical application and having molar ratio of MgO: Al₂O₃ in the range of 7.7 to 4.6, XRD pattern having intensity peaks (A°) 7.77, 3.87, 2.57, 1.53, 1.50, 1.42 and sharp IR absorption peak of interlayer carbonate ions ca.1360cm⁻¹ was used for the preparation of stable iodizing agent.

The hydrotalcite powder is calcined at 450-550°C for 30-75 minutes in a furnace to decompose the carbonate and drive off carbon dioxide. The calcined hydrotalcite is cooled to 60-80°C. A solution of potassium iodate having concentration in the range of 0.005-0.022M is prepared in distilled water and heated to 60°C-80°C to expel dissolved carbon dioxide. The calcined and cooled hydrotalcite is added to this solution at 60-80°C and stirred for five minutes maintaining the said temperature. The stirring is given for one minute at an interval of 30 minute. After one hour, the slurry is filtered. The solid is washed with distilled water to make it free from adhering electrolytes. The solid is dried at 80-110°C. The dried solid is ground and passed through 60 BSS mesh.. The prepared hydrotalcite is mixed with solar salt to contain 30ppm of iodine in the resultant salt.

The iodine estimation was carried out using classical method of iodometry. The analysis of magnesium content was carried out using EDTA compleximetry titration. Aluminium was estimated employing gravimetric method by precipitating as aluminum hydroxide and weighing the fired precipitates as Al₂O₃. Powder XRD pattern was taken in the range of 2θ = 5-70°. IR spectra were taken using KBr pellets in the frequency range of 4000-400 cm⁻¹. Potassium ions were estimated using flame photometric technique.

The present invention relates to the preparation of a novel and stable iodizing agent suitable for iodine stability in iodised salt. This iodizing agent was prepared by intercalation of iodate ions, available from aqueous solution of alkali metal salt, in the interlayer space of synthetic pharma grade hydrotalcite. The method of the present invention does not require any special device and the use of spray technique, conventionally used for direct iodization of common salt dispensed with. The iodate ions in the interlayer space impart enhanced stability to iodine. In the present invention, the absorption of iodate ions, in the interlayer space of synthetic hydrotalcite, for enhanced stability, is not reported in the prior art. Besides, no reference is cited of the use of calcined hydrotalcite for preparing iodine stable iodizing agent. The inventive steps adopted in the present invention are (i) intercalation of iodate anions (85%) in the interlayer space of hydrotalcite obviates the need of direct iodization by conventional agent viz potassium iodate; (ii) the stability of iodine is maintained and it prevents the loss of iodine due to moisture, temperature and metal salt; (iii) absorption of iodate ions in the interlayer space of calcined hydrotalcite dispenses the use of micro-encapsulation of potassium iodide and potassium iodate in modified starch, gelatin , sodium hexa meta phosphate and purified sodium chloride; (iv) preparing iodizing agent in aqueous solution kept at 70°C and at atmospheric pressure, dispenses with the need of hydrothermal treatment; (v) the iodizing agent can be dried at 80 to 100 °C and obviates the need of spray dying or fluidized bed drying.

The following examples are given as way of illustration and should not be construed to limit the scope of present invention.

### EXAMPLE-1

6 gm of hydrotalcite having molar ratio of MgO: Al₂O₃ equal to 6.0, XRD pattern having intensity peaks (A°) 7.77, 3.87, 2.57, 1.53, 1.50, 1.42, and sharp IR absorption peak of interlayer carbonate ions at 1370 cm⁻¹, was powdered to pass through 60 BSS mesh and calcined in a furnace at 500°C for one hour. The calcined hydrotalcite was cooled to 65°C. This was added to 100 ml of 0.01M potassium iodate solution prepared in distilled water, which is heated to 70°C prior to addition. The reacting mass was stirred for five minutes maintaining the said temperature and left to stand for one hour with intermittent stirring for one minute at an interval of 30 minute. The resultant slurry was filtered. The solid separated was washed with distilled water till the wash filtrate does not show any silver iodate precipitate with silver nitrate. The solids were dried at 110°C. The dry material was analyzed for its iodine content using classical method of iodometry employing sodium thiosulphate as titrant and found to contain 2.1% of iodine in it. The composite filtrate was analysed for its potassium iodate content and found to contain 11.7mg of potassium iodate.

### EXAMPLE-2

6 gm of hydrotalcite having molar ratio of MgO: Al₂O₃ equal to 5.5, XRD pattern having intensity peaks (A⁰) 7.60, 3.82, 2.57, 1.53, 1.50, 1.42, and sharp IR absorption peak of interlayer carbonate ions at 1365 cm⁻¹, was powdered to pass through 60 BSS mesh and calcined in a furnace at 450°C for one hour. The calcined hydrotalcite was cooled to 80°C. This was added to 50 ml of 0.005M potassium iodate solution prepared in distilled water which is heated to 80°C prior to addition. The reacting mass was stirred for five minutes maintaining the said temperature and left to stand for one hour with intermittent stirring for one minute at an interval of 30 minute. The resultant slurry was filtered. The solid separated was washed with distilled water till the wash filtrate does not show any silver iodate precipitate with silver nitrate. The solids were dried at 110°C. The dry material was analyzed for its iodine content using classical method of iodometry employing sodium thiosulphate as titrant and found to contain 0.55% of iodine in it. The composite filtrate was analysed for its potassium iodate content and found to contain 1.20 mg of potassium iodate. The K⁺ content of the composite filtrate analysed by flame photometer was found to be 10 mg.

### EXAMPLE-3

6gm of hydrotalcite having molar ratio of MgO: Al₂O₃ equal to 6.0, XRD pattern having intensity peaks (A°) 7.77, 3.87, 2.57, 1.53, 1.50, 1.42, and sharp IR absorption peak of interlayer carbonate ions at 1370 cm⁻¹, was powdered to pass through 60 BSS mesh and calcined in a furnace at 525°C for one hour. The calcined hydrotalcite was cooled to 60°C. This was added to 50 ml of 0.01M potassium iodate solution prepared in distilled water which is heated to 60°C prior to addition. The reacting mass was stirred for five minutes maintaining the said temperature and left to stand for one hour with intermittent stirring for one minute at an interval of 30 minute. The resultant slurry was filtered. The solid separated was washed with 200 ml distilled water till the wash filtrate does not show any silver iodate precipitate with silver nitrate. The solids were dried at 110°C. The dry material was analyzed for its iodine content using classical method of iodometry employing sodium thiosulphate as titrant and found to contain 1.10% of iodine in it. The composite filtrate containing wash water was analysed for its potassium iodate content and found to contain 5.7 mg of potassium iodate in 250 ml of composite filtrate. The K⁺ content of the composite filtrate analysed by flame photometer was found to be 20 mg of K⁺.

### EXAMPLE-4

6 gm of hydrotalcite having molar ratio of MgO: Al₂O₃ equal to 5.5, XRD pattern having intensity peaks (A⁰) 7.60, 3.82, 2.57, 1.53, 1.50, 1.42, and sharp IR absorption peak of interlayer carbonate ions at 1365 cm⁻¹, was powdered to pass through 60 BSS mesh and calcined in a furnace at 500°C for one hour. The calcined hydrotalcite was cooled to 75°C. This was added to 100 ml of 0.015M potassium iodate solution prepared in distilled water which is heated to 75°C prior to addition. The reacting mass was stirred for five minutes maintaining the said temperature and left to stand for one hour with intermittent stirring for one minute at an interval of 30 minute. The resultant slurry was filtered. The solid separated was washed with distilled water till the wash filtrate does not show any silver iodate precipitate with silver nitrate. The solids were dried at 110°C. The dry material was analyzed for its iodine content using classical method of iodometry employing sodium thiosulphate as titrant and found to contain 3.0% of iodine in it. The filtrate was analysed for its potassium iodate content and found that 86% of input iodate was consumed.

### EXAMPLE-5

6 gm of hydrotalcite having molar ratio of MgO: Al₂O₃ equal to 6.0, XRD pattern having intensity peaks (A°) 7.77, 3.87, 2.57, 1.53, 1.50, 1.42, and sharp IR absorption peak of interlayer carbonate ions at 1370 cm⁻¹, was powdered to pass through 60 BSS mesh and calcined in a furnace at 500°C for seventy five minutes. The calcined hydrotalcite was cooled to 75°C. This was added to 125 ml of 0.021M potassium iodate solution prepared in distilled water which is heated to 75°C prior to addition. The reacting mass was stirred for five minutes maintaining the said temperature and left to stand for one hour with intermittent stirring for one minute at an interval of 30 minute. The resultant slurry was filtered. The solid separated was washed with distilled water till the wash filtrate does not show any silver iodate precipitate with silver nitrate. The solids were dried at 110°C. The dry material was analyzed for its iodine content using classical method of iodometry employing sodium thiosulphate as titrant and found to contain 5.16% of iodine in it.

### EXAMPLE-6

12 gm of hydrotalcite having molar ratio of MgO: Al₂O₃ equal to 6.0, XRD pattern having intensity peaks (A°) 7.77, 3.87, 2.57, 1.53, 1.50, 1.42, and sharp IR absorption peak of interlayer carbonate ions at 1370 cm⁻¹, was powdered to pass through 60 BSS mesh and calcined in a furnace at 500°C for one hour. The calcined hydrotalcite was cooled to 65°C. This was added to 100 ml of 0.01M potassium iodate solution prepared in distilled water which is heated to 70°C prior to addition. The reacting mass was stirred for five minutes maintaining the said temperature and left to stand for one hour with intermittent stirring for one minute at an interval of 30 minute. The resultant slurry was filtered. The solid separated was washed with distilled water till the wash filtrate does not show any silver iodate precipitate with silver nitrate. The solids were dried at 110°C. The dry material was analyzed for its iodine content using classical method of iodometry employing sodium thiosulphate as titrant and found to contain 1.1% of iodine in it.

### EXAMPLE-7

3 gm of hydrotalcite having molar ratio of MgO: Al₂O₃ equal to 5.5, XRD pattern having intensity peaks (A°) 7.60, 3.82, 2.57, 1.53, 1.50, 1.42, and sharp IR absorption peak of interlayer carbonate ions at 1365 cm⁻¹, was powdered to pass through 60 BSS mesh and calcined in a furnace at 500°C for one hour. The calcined hydrotalcite was cooled to 75°C. This was added to 180 ml of 0.0147M potassium iodate solution prepared in distilled water which is heated to 75°C prior to addition. The reacting mass was stirred for five minutes maintaining the said temperature and left to stand for one hour with intermittent stirring for one minute at an interval of 30 minute. The resultant slurry was filtered. The solid separated was washed with distilled water till the wash filtrate does not show any silver iodate precipitate with silver nitrate. The solids were dried at 110°C. The dry material was analyzed for its iodine content using classical method of iodometry employing sodium thiosulphate as titrant and found to contain 10.2% of iodine in it. The filtrate was analysed for its potassium iodate content and found that 87% of input iodate was consumed.

### EXAMPLE-8

4 gm of hydrotalcite having molar ratio of MgO: Al₂O₃ equal to 5.5, XRD pattern having intensity peaks (A°) 7.60, 3.82, 2.57, 1.53, 1.50, 1.42, and sharp IR absorption peak of interlayer carbonate ions at 1365 cm⁻¹, was powdered to pass through 60 BSS mesh and calcined in a furnace at 500°C for one hour. The calcined hydrotalcite was cooled to 75°C. This was added to 180 ml of 0.0155M potassium iodate solution prepared in distilled water, which is heated to 75°C prior to addition. The reacting mass was stirred for five minutes maintaining the said temperature and left to stand for one hour with intermittent stirring for one minute at an interval of 30 minute. The resultant slurry was filtered. The solid separated was washed with distilled water till the wash filtrate does not show any silver iodate precipitate with silver nitrate. The solids were dried at 110°C. The dry material was analyzed for its iodine content using classical method of iodometry employing sodium thiosulphate as titrant and found to contain 8.15% of iodine in it. The filtrate was analysed for its potassium iodate content and found that 88% of input iodate was consumed.

### EXAMPLE-9

1.43 gm of iodate containing hydrotalcite prepared in Example-1 was mixed thoroughly and uniformly with 1 kg of solar salt, which is ground and sieved to obtain fraction of -32+70 BSS mesh. The salt used was having impurity of Ca-0.09% (w/w), Mg-0.065%(w/w), SO₄-0.15%(w/w), Insoluble- 0.05%(w/w), Moisture- 0.53%(w/w) . The iodized salt so prepared contains 30 ppm of iodine. One of the best brand iodized salt was obtained from the market and used as control salt sample, which was analyzed for its iodine content and found to contain 39ppm of iodine. 50 gm of salt samples prepared from above were kept in oven at 100°C for 96 hours and iodine content was measured every 24 hours. The salt containing iodine in the form of hydrotalcite equivalent to 30 ppm of iodine retained all the iodine without any loss. The branded salt, which contained 39 ppm of iodine, found to contain 31 ppm of iodine at the end of 96 hours incurring loss of iodine of 21%.

The advantages of the present invention are :
i. The invention provides a stable iodizing compound for imparting enhanced stability of iodine in iodised salt.
ii. The iodine stability in iodizing agent is also enhanced in presence of moisture, chemical impurities, and under varying temperature conditions.
iii. The iodizing agent is prepared using pharma grade synthetic hydrotalcite.
iv. The iodizing agent having enhanced stability of iodine can be prepared employing simple unit operations in cost effective manner.
v. The iodizing agent is easily and uniformly mixed in a dry state with the edible salt.

## Claims

1. A method for the preparation of iodizing agent that offers stability of iodine in formulation of iodised salt, the method comprising:
(i) grinding pharma grade hydrotalcite to obtain hydrotalcite powder;
(ii) calcining the powdered hydrotalcite obtained in step (i);
(iii) cooling the calcined hydrotalcite to obtain solid synthetic hydrotalcite;
(iv) heating an aqueous potassium iodate solution;
(v) adding calculated quantity of the solid synthetic hydrotalcite obtained in step (iii) into the potassium iodate solution prepared in step (iv) under agitation for uniform dispersion;
(vi) maintaining the temperature in the range of 60 to 80 °C while stirring the reactants to obtain a slurry;
(vii) aging the slurry for a period between 30 to 60 minutes and intermittently stirring for 1 minute at an interval of 30 minutes for effective contact and substitution of iodate anions in the interlayer space;
(viii) filtering the resultant slurry and washing the cake so obtained with distilled water to remove adhering salts therefrom;
(ix) drying the cake to get the iodizing agent.

2. A method as claimed in claim 1 wherein the pharma grade synthetic hydrotalcite has MgO:Al₂O₃ molar ratio of in the range of 7.7 to 4.6; XRD pattern with intensity peaks (A⁰) 7.77, 3.87, 2.57, 1.53, 1.50, 1.42 and sharp IR absorption peak of interlayer carbonate ions at ca.1360cm⁻¹.

3. A method as claimed in claim 1 wherein the synthetic hydrotalcite is ground to pass through 60 BSS mesh.

4. A method as claimed in claim 1 wherein the iodate salt is a water soluble alkali metal salt.

5. A method as claimed in claim 1 wherein the hydrotalcites is calcined at a temperature in the range of 450°C to 550 °C for 30 to 75 minutes followed by cooling to 60-80°C.

6. A method as claimed in claim 1 wherein the concentration of metal salt is in the range of 0.005 to 0.022 molar.

7. A method as claimed in claim 1 wherein the aqueous potassium iodate solution is heated in the range 60-80°C prior to addition of calcined synthetic hydrotalcite.

8. A method as claimed in claim 1 wherein the iodine content in the synthetic hydrotalcite is in the range of 0.5-10.0% (w/w).

9. A method as claimed in claim 1 wherein the iodate-containing synthetic hydrotalcite was dried in an oven at 80-110°C to expel all moisture.

10. A method as claimed in claim 1 wherein the iodine content of the iodised salt using novel iodizing agent subjected to stability studies was 30ppm.

## Patentansprüche

1. Verfahren zur Herstellung eines iodisierenden Mittels mit dem die Stabilität von Jod bei der Formulierung von jodiertem Salz ermöglicht wird, wobei das Verfahren umfasst:
(i) Mahlen von Hydrotalcit in pharmazeutischer Güte, um Hydrotalcit-Pulver zu erhalten;
(ii) Kalzinieren des in Schritt (i) erhaltenen Hydrotalcit-Pulvers;
(iii) Kühlen des kalzinierten Hydrotalcits, um festes synthetisches Hydrotalcit zu erhalten;
(iv) Erwärmen einer wässrigen Kaliumiodat-Lösung;
(v) Zugabe einer berechneten Menge des in Schritt (iii) erhaltenen festen synthetischen Hydrotalcits zu der in Schritt (iv) erhaltenen wässrigen Kaliumiodat-Lösung unter Bewegung, um eine homogene Dispersion zu erlangen;
(vi) Beibehalten der Temperatur im Bereich von 60° bis 80° C, während die Reaktanten gerührt werden, um eine Aufschlämmung zu erhalten;
(vii) Altern der Aufschlämmung für einen Zeitraum zwischen 30 und 60 Minuten und periodisches Rühren von 1 Minute in einem Intervall von 30 Minuten für einen effektiven Kontakt und eine Substitution der lodat-Anionen im Zwischenschichtbereich;
(viii) Filtern der sich ergebenden Aufschlämmung und Waschen des so erhaltenen Filterkuchens mit destilliertem Wasser, um an diesem haftende Salze zu entfernen;
(ix) Trocknen des Filterkuchens, um das iodisierende Mittel zu erhalten.

2. Verfahren nach Anspruch 1, wobei das in pharmazeutischer Güte vorliegende synthetische Hydrotalcit ein Molverhältnis von MgO:Al₂O₃ im Bereich von 7,7 bis 4,6, ein Röntgenbeugungsmuster (XRD pattern) mit Intensitätsspitzen (A°) bei 7,77, 3,87, 2,57, 1,53, 1,50, 1,42 und eine scharfe IR-Absorptionsspitze der Karbonat-Ionen der Zwischenschicht bei circa 1360 cm⁻¹ aufweist.

3. Verfahren nach Anspruch 1, wobei das synthetische Hydrotalcit derart gemahlen wird, dass es ein 60 BSS Sieb passiert.

4. Verfahren nach Anspruch 1, wobei das Iodat-Salz ein wasserlösliches Alkalimetallsalz ist.

5. Verfahren nach Anspruch 1, wobei das Hydrotalcit bei einer Temperatur im Bereich von 450° C bis 550° C für 30 bis 75 Minuten, gefolgt von einer Abkühlung bis auf 60° - 80° C, kalziniert wird.

6. Verfahren nach Anspruch 1, wobei die molare Konzentration von Metallsalz im Bereich von 0,005 bis 0,022 liegt.

7. Verfahren nach Anspruch 1, wobei die wässrige Kaliumiodat-Lösung vor der Zugabe von kalziniertem synthetischen Hydrotalcit auf eine Temperatur im Bereich von 60° - 80° C erwärmt wird.

8. Verfahren nach Anspruch 1, wobei der Jodgehalt in dem synthetischen Hydrotalcit im Bereich von 0,5 - 10,0 Gewichts% liegt.

9. Verfahren nach Anspruch 1, wobei das lodat-beinhaltende synthetische Hydrotalcit in einem Ofen bei 80° - 110°C getrocknet wurde, um Feuchtigkeit vollständig auszutreiben.

10. Verfahren nach Anspruch 1, wobei der Jodgehalt des jodierten Salzes unter Verwendung des neuen iodisierenden Mittels in Stabilitätsstudien 30ppm betrug.

## Revendications

1. Procédé pour la préparation d'un agent iodant qui offre une stabilité de l'iode dans une formulation de sel iodé, le procédé comprenant les étapes consistant à :
(i) broyer de l'hydrotalcite de qualité pharmaceutique pour obtenir de la poudre d'hydrotalcite ;
(ii) calciner l'hydrotalcite en poudre obtenu à l'étape (i) ;
(iii) refroidir l'hydrotalcite calciné pour obtenir de l'hydrotalcite synthétique solide ;
(iv) chauffer une solution d'iodate de potassium aqueuse ;
(v) ajouter une quantité calculée d'hydrotalcite synthétique solide obtenu l'étape (iii) dans la solution d'iodate de potassium préparée à l'étape (iv) sous agitation pour obtenir une dispersion uniforme ;
(vi) maintenir la température dans la plage de 60 à 80 °C tout en agitant les réactifs pour obtenir une suspension ;
(vii) faire vieillir la suspension sur une période comprise entre 30 et 60 minutes et procéder à une agitation par intermittence pendant 1 minute à intervalles de 30 minutes pour un contact efficace et la substitution des anions iodate dans l'espace intercouche ;
(viii) filtrer la suspension obtenue et laver le gâteau ainsi obtenu à l'eau distillée pour en éliminer les sels adhérents ;
(ix) sécher le gâteau pour recueillir l'agent iodant.

2. Procédé selon la revendication 1, dans lequel l'hydrotalcite synthétique de qualité pharmaceutique présente un rapport molaire MgO/Al₂O₃ dans la plage de 7,7 à 4,6, un diagramme XRD avec des pics d'intensité (A°) de 7,77, 3,87, 2,57, 1,53, 1,50, 1,42 et un pic d'absorption IR marqué des ions carbonate intercouche à environ 1360 cm⁻¹.

3. Procédé selon la revendication 1, dans lequel l'hydrotalcite synthétique est broyé pour passer à travers un maillage BSS 60.

4. Procédé selon la revendication 1, dans lequel le sel iodate est un sel de métal alcalin hydrosoluble.

5. Procédé selon la revendication 1, dans lequel l'hydrotalcite est calciné à une température dans la plage de 450 °C à 550 °C pendant 30 à 75 minutes puis refroidi à 60-80 °C.

6. Procédé selon la revendication 1, dans lequel la concentration de sel métallique se situe dans la plage de 0,005 à 0,022 molaire.

7. Procédé selon la revendication 1, dans lequel la solution d'iodate de potassium aqueuse est chauffée dans la plage de 60 à 80 °C avant d'ajouter l'hydrotalcite synthétique calciné.

8. Procédé selon la revendication 1, dans lequel la teneur en iode de l'hydrotalcite synthétique se situe dans la plage de 0,5 à 10,0 % (p/p).

9. Procédé selon la revendication 1, dans lequel l'hydrotalcite synthétique contenant de l'iodate a été séché dans un four à 80-110 °C pour chasser toute trace d'humidité.

10. Procédé selon la revendication 1, dans lequel la teneur en iode du sel iodé en utilisant un nouvel agent iodant soumis à des études de stabilité a été de 30 ppm.
